# EUROPEAN PATENT APPLICATION

(11) **EP 4 502 790 A1**
(43) Date of publication of application: **05.02.2025**
(21) Application number: 23773624.4
(22) Date of filing: 10.03.2023
(51) Int. Cl.: G06F 9/451, G06F 3/0485, G06F 3/0484, G06F 3/041, A63F 3/02

(54) **LAYOUT OBJECT CONTROL METHOD AND APPARATUS, ELECTRONIC DEVICE AND STORAGE MEDIUM**

(30) Priority: 25.03.2022 CN 202210307442
(71) Applicant: Beijing Zitiao Network Technology Co., Ltd., Beijing 100190 (CN)
(72) Inventor: LI, Lin, Beijing 100086 (CN)
(74) Representative: Dentons UK and Middle East LLP
(86) International application number: PCT/CN2023/080693
(87) International publication number: WO 2023/179375

(57) **Abstract**

Disclosed in embodiments of the present disclosure are a layout object control method and apparatus, an electronic device and a storage medium. The method comprises: in response to a layout start instruction, displaying a target layout interface, wherein the target layout interface comprises a layout region and a peripheral region other than the layout region; and in response to having an object control permission for an object to be laid and receiving an object control instruction inputted in the peripheral region for controlling said object, controlling said object to execute a response operation corresponding to the object control instruction.

## Description

The present application claims the priority of Chinese patent application No. 202210307442.5, filed on March 25, 2022, the entire disclosure of which is incorporated herein by reference as part of the disclosure of this application.

### TECHNICAL FIELD

The embodiments of the present disclosure relate to the technical field of computer application, for example, relate to a control method of a layout object, an apparatus, an electronic device, and a storage medium.

### BACKGROUND

With the development of intelligent devices, it has become more and more popular for modem people to operate games of layout style such as chess and puzzles in various game applications of terminals.

In the process of game operation, it is needed to move the object to be laid out in a limited time and arrange it in an expected layout position in the preset layout region.

Due to the limited screen size of the chessboard or jigsaw puzzle frame in the terminal, when users operate the objects to be laid out such as chess pieces or fragments in the preset layout region displayed in the screen, the actual layout position deviates from the expected layout position, which leads to a high misoperation rate in the game process and reduces the user's game experience.

### SUMMARY

The embodiments of the present disclosure provide a control method of a layout object, an apparatus, an electronic device, and a storage medium, so as to improve the accuracy of layout control of the object to be laid out.

In the first aspect, an embodiment of the present disclosure provides a control method of a layout object, and the method comprises:
exhibiting a target layout interface in response to a layout start instruction, wherein the target layout interface comprises a layout region and a peripheral region except the layout region; and
in response to having an object control authority of an object to be laid out and receiving an object control instruction for controlling the object to be laid out input in the peripheral region, controlling the object to be laid out to execute a response operation corresponding to the object control instruction.

In the second aspect, an embodiment of the present disclosure provides a control apparatus of a layout object, and the apparatus comprises:
a target layout interface exhibition module, configured to exhibit a target layout interface in response to a layout start instruction, wherein the target layout interface comprises a layout region and a peripheral region except the layout region; and
a to-be-laid-out object control module, configured to, in response to having an object control authority of an object to be laid out and receiving an object control instruction for controlling the object to be laid out input in the peripheral region, control the object to be laid out to execute a response operation corresponding to the object control instructions.

In the third aspect, an embodiment of the present disclosure provides an electronic device, and the electronic device comprises:
one or more processors; and
a storage apparatus for storing one or more programs,
wherein, when the one or more programs are executed by the one or more processors, the one or more processors implement the control method of the layout object provided by any embodiment of the present disclosure.

In the fourth aspect, an embodiment of the present disclosure provides a computer-readable storage medium, wherein a computer program is stored on the computer-readable storage medium, when executed by a processor, the computer program implements the control method of the layout object provided by any embodiment of the present disclosure.

### BRIEF DESCRIPTION OF DRAWINGS

In order to clearly illustrate the embodiments of the disclosure, the drawings needed to describe the embodiments are briefly described in the following. The described drawings are only drawings of part of the embodiments of the disclosure and are not all the drawings. For those skilled in the art, other accompany drawings can be obtained based on these drawings without creative labor.
Fig. 1 is a flowchart of a control method of a layout object provided by an embodiment of the present disclosure;
Fig. 2 is a flowchart of another control method of a layout object provided by an embodiment of the present disclosure;
Fig. 3 is a schematic operation diagram of a chess playing method involved by an embodiment of the present disclosure;
Fig. 4 is a flowchart of another control method of a layout object provided by an embodiment of the present disclosure;
Fig. 5 is a schematic structural diagram of a control apparatus of a layout object provided by an embodiment of the present disclosure; and
Fig. 6 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are illustrated in the drawings, it should be understood that the present disclosure can be embodied in various forms. These embodiments are provided for a more thorough and complete understanding of the present disclosure. It should be understood that the drawings and embodiments of the present disclosure are only used for exemplary functions.

It should be understood that the steps described in the method implementations of the present disclosure can be performed in different orders and/or in parallel. Furthermore, the method implementations may include additional steps and/or omit to perform the illustrated steps.

As used herein, the terms "comprising" and "including" and their variants are openended comprising, that is, "comprising but not limited to". The term "based on" is "at least partially based on". The term "an embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in this disclosure are only used for distinguishing different apparatus, modules, or units. It should be noted that the modifications of "a", "one" and "a plurality of" mentioned in this disclosure are schematic, and those skilled in the art should understand that unless the context clearly indicates otherwise, they should be understood as "one or more".

Names of messages or information exchanged among multiple apparatus in the implementations of the present disclosure are only used for illustrative purposes.

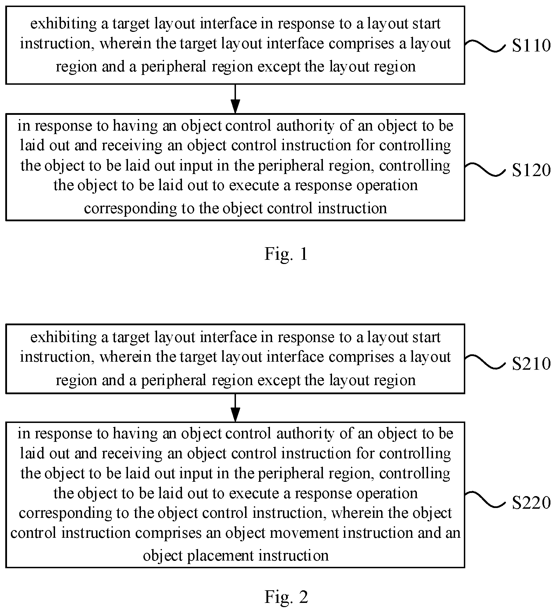

Fig. 1 is a schematic flow chart of a control method of a layout object provided by an embodiment of the present disclosure. This embodiment can be applied to the situation of controlling objects to be laid out in a target layout interface. This method can be executed by a control apparatus of a layout object, which can be realized by software and/or hardware and can be configured in a terminal and/or a server to realize the control method of a layout object in the embodiments of the present disclosure.

As illustrated in Fig. 1, the method of this embodiment may include following operations.

S 110, in response to the layout start instruction, exhibiting a target layout interface, wherein the target layout interface includes a layout region and a peripheral region except the layout region.

In some other embodiments, the layout object controller of the object to be laid out can only move and place the object to be laid out at the target layout position in the layout region by controlling the object to be laid out in the layout region in the target layout interface. In the process of controlling the object to be laid out to move, due to the limited screen size of the terminal screen, the control flexibility of the layout object controller in the layout region is reduced, which leads to the situation that the actual layout position of the object to be laid out is inconsistent with the expected preset layout position in the process of controlling the object to be laid out, thereby increasing the misoperation rate of controlling the object to be laid out.

In order to solve the above problems, the target layout interface provided by the embodiments of the present disclosure includes a layout region and a peripheral region except the layout region. The layout region is a region where the object to be laid out can be laid out, and other regions in the target layout interface except the layout region are peripheral regions. For example, in the target layout interface corresponding to chess applications, the chessboard is the layout region, and other regions except the chessboard are the peripheral regions. The chess player can perform the chess dropping operation in the peripheral region outside the chessboard and can arrange the chess pieces to be dropped in the chessboard.

In the related technologies, only in the layout region of the target layout interface the object to be laid out can be controlled to lay out, and the peripheral regions except the layout region are only used to adapt the screen size of the terminal where the current layout application is installed. In this embodiment, the layout region in the target layout interface is used to layout the objects to be laid out, and the peripheral region is used to control the objects to be laid out, which helps the objects to be laid out to be laid out in the layout region. The above operations can prevent the layout region from being blocked when the layout object controller controls the objects to be laid out in the peripheral region, so that the actual layout position of the objects to be laid out can be consistent with the preset layout position, and the misoperation rate of layout operation can be reduced.

In the embodiments of the present disclosure, the layout start instruction can be understood as an instruction to start a preset layout application in the currently held terminal, which can be used to exhibit the target layout interface corresponding to the layout application. In this embodiment, different target layout interfaces can be displayed based on different layout applications. For example, when a user operates a chess layout application, that is, the user triggers a layout start instruction, the terminal device displays a target layout interface including a chessboard in response to the layout start instruction. Another example is that the user operates a jigsaw puzzle layout application, that is, the user triggers a layout start instruction, and the terminal device responds to the layout start instruction to display the target layout interface including the background area of the image to be jigsaw puzzle. Of course, the user can also operate other layout applications, such as decoration filling and other layout applications, which display the target layout interface including the corresponding content. In this embodiment, the display content of the target layout interface can be set according to the actual situation.

Optionally, respective preset layout applications in the currently held terminal can be monitored, and when the user's layout start instruction for the layout application is monitored, the target layout interface corresponding to the layout application is displayed in response to the layout start instruction. The target layout interface includes a layout region and a peripheral region except the layout region.

For example, there are many ways to generate the layout start instruction, such as based on the application startup operation input by the user for the layout application program, or generated when the end event of the previous layout is detected, or generated in response to acting on a preset layout start control.

S120, in response to having the object control authority of the object to be laid out and receiving the object control instruction for controlling the object to be laid out, controlling the object to be laid out to execute a response operation corresponding to the object control instruction.

In the embodiments of the present disclosure, in order to ensure the controllability of the layout process in the layout application, the layout object can be controlled only when the object control authority is possessed, that is, the layout object controller activated by the control authority can control the layout object. Optionally, before controlling the object to be laid out, the object control authority of the object to be laid out is determined according to a preset layout rule, and the preset layout rule includes the layout object controller of the object to be laid out and the authority activation mode of the layout object controller. The layout object controller can be a user having the control authority of the object to be laid out, for example, may be the user who inputs the layout start instruction of the current layout application, or the layout object controller can also be a virtual user such as a server. In this embodiment, the type of the layout object controller can be set according to the actual situation.

Optionally, at least one layout object controller having the object control authority of the object to be laid out in the current target layout interface and the authority activation mode corresponding to each layout object controller can be determined based on the preset layout rules. It should be noted that the authority activation modes of respective layout object controllers can be the same or different. It should be noted that only when the layout object controller is in the state of authority activation can the controller has the control authority, that is, the controller can control the object to be laid out to perform operations such as moving and/or placing in the layout region.

In some embodiments, respective layout object controller with the object control authority of the object to be laid out may be set in advance. For example, only one layout object controller with of the object to be laid out is set in advance, for example, the user who inputs the layout start instruction is taken as the layout object controller. Optionally, two or more layout object controllers are set in advance, for example, both the user who inputs the layout start instruction and the server of the current layout application can be taken as the controllers of the objects to be laid out. For another example, the user who inputs the layout start instruction and other users invited thereby can be taken as the layout object controllers of the objects to be laid out. Of course, the layout object controller can be set in other ways.

In some embodiments, when only one layout object controller is set, the activation mode of its authority can be any activation mode, for example, when the target layout interface is displayed, the authority of the layout object controller is activated accordingly, so that the controller can directly control the layout object. Alternatively, the authority activation mode of the layout object controller can run through the layout process. For example, in response to the layout start instruction, the object control authority of the layout object controller to control the layout object can be activated. Optionally, when two or more layout object controllers are preset, each layout object controller can be activated respectively based on the preset authority activation mode, so that it can control the object to be laid out. Optionally, the preset authority activation mode can be to activate each layout object controller in turn according to the preset layout order or the preset objects to be laid out. For another example, the layout object controller of the object to be laid out in the current round is determined based on the layout result formed by controlling the object to be laid out in the previous round. Of course, any layout object controller can be activated randomly.

It should be noted that when two or more layout object controllers are set in advance, two or more layout object controllers cannot have object control authority for the same object to be laid out at the same time. When two or more layout object controllers are preset, and the objects to be laid out corresponding to respective layout object controllers are different, the two or more layout object controllers can have the object control authority for corresponding objects to be laid out, respectively.

In the embodiments of the present disclosure, the object control authority of the object to be laid out is determined according to the preset layout rules. If the object control authority of the object to be laid out is possessed, the object control instruction for controlling the object to be laid out input by the layout object controller is monitored. The layout object controller can input object control instructions in the peripheral region or in the layout region.

Optionally, in response to receiving an object control instruction for controlling the object to be laid out input in the peripheral region, the object to be laid out is controlled to perform a response operation corresponding to the object control instruction. Optionally, the layout control instruction includes control instructions such as an object movement instruction, a layout canceling instruction, an object placement instruction, or the like. Correspondingly, the operation of the object to be laid out includes moving operation, layout operation, or the like. The layout operation may include a placing operation or a canceling placing operation. Optionally, when the layout object controller inputs an object control instruction in the peripheral region, based on the object control instruction, the object to be laid out is controlled to perform a response operation corresponding to the object control instruction in the layout region.

The method of this embodiment includes: displaying a target layout interface in response to a layout start instruction, wherein the target layout interface includes a layout region and a peripheral region except the layout region; in response to having the object control authority of the object to be laid out and receiving the object control instruction for controlling the object to be laid out input in the peripheral region, controlling the object to be laid out to execute the response operation corresponding to the object control instruction. The above-described technical scheme, by controlling the object to be laid out to perform a response operation corresponding to the object control instruction in the layout region when receiving the object control instruction of the object to be laid out inputted by the layout object controller in the peripheral region of the target layout interface, solves the problem of high misoperation rate caused by controlling the object to be laid out in the layout region of the target layout interface in the related art, and achieves the effect of improving the accuracy of layout control of the object to be laid out. And in the above-described technical scheme, the receiving of the object control instruction of the layout object controller can be started only when the layout object controller has the object control authority of the object to be laid out, so that the effect is that the server is prevented from monitoring the instruction of each object controller all the time, the pressure of the server is reduced, the processing power consumption of the server is reduced, and the layout efficiency is improved.

Fig. 2 is a flowchart of another control method of a layout object provided by an embodiment of the present disclosure. In this embodiment, on the basis of any alternative embodiment in the present disclosure, optionally, the object control instruction includes an object movement instruction. Receiving an object control instruction for controlling an object to be laid out input in the peripheral region includes: receiving the object movement instruction for controlling the object to be laid out which is generated by a sliding operation input in the peripheral region. Controlling the object to be laid out to execute the response operation corresponding to the object control instruction includes: controlling the object to be laid out to move along the sliding trajectory corresponding to the sliding operation within the layout region. The explanations of terms that are the same as or corresponding to the above-mentioned embodiments are not repeated here.

As illustrated in Fig. 2, the method of this embodiment may include:
S210, in response to the layout start instruction, exhibiting a target layout interface, wherein the target layout interface includes a layout region and a peripheral region except the layout region;
S220, in response to having the object control authority of the object to be laid out and receiving the object control instruction for controlling the object to be laid out input in the peripheral region, controlling the object to be laid out to perform a response operation corresponding to the object control instruction, wherein the object control instructions include an object movement instruction and an object placement instruction.

In the embodiments of the present disclosure, the instruction operation corresponding to each object control instruction can be preset. For example, in this embodiment, the object control instruction includes an object movement instruction, and the instruction operation corresponding to the object movement instruction may include a sliding operation in the peripheral region of the target layout interface.

Optionally, the layout object controller who has the object control authority of the object to be laid out is determined, and the object control instruction input by the layout object controller is monitored. Optionally, when the command operation of the sliding operation input by the layout object controller input in the peripheral region is detected, it is determined that the object movement command for controlling the object to be laid out is received, and the object to be laid out is controlled to move in the layout region along the sliding trajectory corresponding to the sliding operation.

In some embodiments, in order to make the object to be laid out move within the layout region, it is needed to determine the sliding trajectory corresponding to the sliding operation in advance. Optionally, the method for determining the sliding trajectory includes determining the sliding start position of the sliding operation input by the layout object controller in the peripheral region. Optionally, a reference line corresponding to the layout region can be set in the peripheral region in advance, and accordingly, the sliding start position of the sliding operation input by the layout object controller can be determined according to the current position of the object to be laid out in the layout region. Of course, the input position in the peripheral region can also be randomly selected as the sliding start position of the sliding operation, and this embodiment can set the sliding start position according to the actual situation.

Optionally, the method for determining the sliding trajectory further comprises: determining position change information of contact positions corresponding to the sliding operation at a plurality of moments, and determining the sliding trajectory corresponding to the sliding operation according to the position change information, wherein the position change information includes direction change information and distance change information.

In some embodiments, when it is detected that the layout object controller inputs the sliding start position in the peripheral region, the position change information of the sliding start position is monitored, and the position change information includes direction change information and distance change information. Optionally, the position within the preset range of the sliding start position is monitored based on the preset interval time. If any position is detected to be triggered, the triggered position is taken as the contact position corresponding to the sliding operation at the current moment, and the direction change information and distance change information of the contact position relative to the sliding start position and/orprevious contact position are determined. The sliding trajectory corresponding to the sliding operation is determined based on the position information of the sliding start position and the direction change information and distance change information of the contact positions corresponding to the plurality of moments respectively.

Optionally, the moving trajectory of the object to be laid out in the layout region is determined according to the sliding trajectory, and the object to be laid out is controlled to move along the moving trajectory.

Alternatively, the object to be laid out can be controlled to move within the layout region based on the corresponding relationship between the sliding trajectory and the moving trajectory. Alternatively, the preset moving trajectory can be in one-to-one correspondence with the sliding trajectory. For example, if the sliding trajectory generated based on the layout object controller slides to the right by 3 distance units, the corresponding moving trajectory of the object to be laid out also moves to the right by 3 distance units. Optionally, the preset moving trajectory can correspond to the sliding trajectory according to the preset mapping relationship. For example, if the sliding trajectory generated based on the layout object controller slides to the right, the corresponding moving trajectory of the object to be laid out moves to the right or to the left. For example, if the sliding trajectory generated based on the layout object controller slides by 4 distance units, the corresponding moving trajectory of the object to be laid out moves by 2 distance units or 8 distance units. Of course, there can be other corresponding relationships between the moving trajectory and the sliding trajectory, which can be set according to the actual situation.

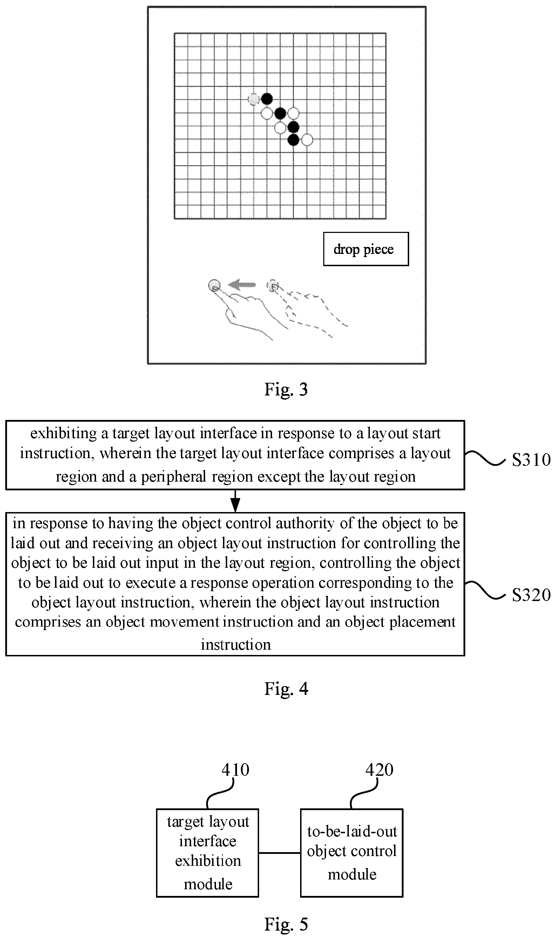

For example, as illustrated in Fig. 3, if the current layout application is a chess-playing application, the objects to be laid out are the chess pieces to be laid out in the chessboard, such as the black pieces and white pieces in the chessboard, and the layout object controller can be understood as the chess-playing user who currently has the authority to layout the chess pieces to be dropped. Alternatively, the layout object controller can perform sliding operation in the peripheral region except the chessboard, so as to generate a sliding trajectory, so that the chess pieces to be dropped in the chessboard can move according to the moving trajectory generated based on the sliding trajectory. For example, in Fig. 3, if the current white chess-playing user has the control authority of white piece to be dropped, the chess-playing user can perform sliding operation in the peripheral region except the chessboard to generate a sliding trajectory, and correspondingly, the white piece to be dropped moves in the chessboard according to the moving trajectory generated based on the sliding trajectory, so that the chess pieces to be dropped can be controlled to move in the chessboard by controlling in the peripheral region without shielding the chessboard, thereby realizing the accurate operation of the moving distance and direction of the chess pieces and reducing the probability of misoperation.

Optionally, the moving start position of the object to be laid out is determined according to the laid-out objects in the layout region, and the object to be laid out is controlled to move along the sliding trajectory corresponding to the sliding operation from the moving start position. The laid-out objects include the objects to be laid out which have been laid out in the layout region. Based on the above exemplary introduction, the laid-out object can also be interpreted as a chess piece that has been dropped in the chessboard.

Optionally, determining the moving start position of the object to be laid out according to the laid-out object may include: if there is a laid-out object in the layout region, obtaining the laid-out position of the last laid-out object in the layout region and taking the laid-out position as the moving start position of the object to be laid out.

For example, if there is a dropped chess piece in the current chessboard, the dropped position of the last dropped chess piece is determined, and the dropped position is taken as the moving start position of the chess piece to be dropped in the current chessboard.

Optionally, in response to the fact that there is no laid-out object in the layout region, the preset starting position is taken as the moving start position of the object to be laid out. Or, a starting position selection operation input for the position capable of laying out in the layout region is received, and the selected position capable of laying out is taken as the moving start position of the object to be laid out.

For example, if there is no dropped chess piece in the current chessboard, the preset starting position is taken as the moving start position of the chess piece to be dropped in the current chessboard, for example, the position of the center of the current chessboard is taken as the moving start position of the first chess piece to be dropped. For another example, a prompt message for selecting the moving start position of the chess piece to be dropped is displayed to the current chess player, and the selection operation of the moving start position input by the current chess player is received, and the selected layout position is taken as the moving start position of the chess piece to be dropped.

Of course, the above-mentioned ways of determining the moving start position of the object to be laid out is only alternative embodiments of the present disclosure, and the embodiment can also determine based on other ways.

On the basis of the above embodiments, the object control instruction in the embodiments of the present disclosure further includes an object placement instruction, and the instruction operation corresponding to the object placement instruction may be to perform a placement trigger operation on a preset placement control in the target layout interface. Alternatively, the object placement instruction can also be a preset trigger operation that is executed based on any operable position of the peripheral region. Of course, it can also be other triggering operations.

In some embodiments, the preset placement control can be preset at any position in the peripheral region of the target layout interface. When the layout object controller determines that the current object to be laid out is at the expected placement position, the preset placement control is triggered in the peripheral region, which can further improve the accuracy of the operation of the object to be laid out in the layout process.

Optionally, it is determined that the object placement instruction for controlling the object to be laid out is received when it is monitored that the layout object controller has executed a trigger operation on the preset placement control in the target layout interface. For example, the trigger operation may include a single click, a double click, a long press, or other trigger operations.

On the basis of the above embodiments, the peripheral region of the target layout interface can also include a canceling placing control, and the canceling placing control can be triggered within the preset time threshold when the layout object controller triggers the preset placement control. The above settings can avoid the wrong layout problem caused by the layout object controller touching the preset placement control by mistake, and increase the flexibility of controlling the layout object in the layout process. Optionally, the preset placement control can be different from the cancelling placing control, or they may be the same control. If the preset placement control and the canceling placing control are the same control, the first trigger operation can be preset as the placement operation, and the second trigger operation can be preset as the canceling placing operation. In this embodiment, the operation forms of the first trigger operation and the second trigger operation can be set according to the actual situation.

Optionally, after the object placement instruction of the object to be laid out is detected, the current position of the object to be laid out is detected, and the object to be laid out is placed at the target layout position in the layout region according to the current position of the object to be laid out. Optionally, in response to determining that the current position of the object to be laid out is a placeable position within the layout region, the current position is taken as the target layout position of the object to be laid out, and the layout operation is performed on the object to be laid out based on the target layout position. In response to determining that the current position of the object to be laid out is a non-placeable position in the layout region, the placeable layout position closest to the current area is detected, and this layout position is taken as the target layout position of the object to be laid out, and layout operation on the object to be laid out is performed based on the target layout position. Optionally, in response to determining that the current location of the object to be laid out is a non-placeable location within the layout region, at least one placeable position with a distance from the current position within a preset distance threshold range, the placeable prompt information of the object to be laid out is generated and displayed on the target layout interface based on respective placeable positions, the selection operation of the placeable position input by the layout object controller is received, the selected placeable position is taken as the target layout position of the object to be laid out, and layout operation is performed on the object to be laid out based on the target layout position.

In this embodiment, the object to be laid out is controlled to perform the moving operation corresponding to the object movement instruction in the layout region when receiving the object movement instruction of the object to be laid out inputted by the layout object controller having the control authority in the peripheral region of the target layout interface, and when the object placement instruction of the object to be laid out is received, the object to be laid out is placed in the target layout position in the layout region according to the current position of the object to be laid out, so that the problem of high misoperation rate caused by controlling the object to be laid out in the layout region of the target layout interface in the related art is solved, and the effect of improving the accuracy of layout control of the object to be laid out is achieved.

Fig. 4 is a flow chart of another control method of a layout object provided by an embodiment of the present disclosure. Based on any alternative embodiment of the above-mentioned embodiments, in this embodiment, optionally, the object to be laid out is controlled to execute a response operation corresponding to the object layout instruction in response to having the object control authority of the object to be laid out and receiving the object layout instruction for controlling the object to be laid out in the layout region. The explanations of terms that are the same as or corresponding to the above-mentioned embodiments are not repeated here.

As illustrated in Fig. 4, the method of this embodiment may include:
S310, in response to the layout start instruction, displaying a target layout interface, wherein the target layout interface includes a layout region and a peripheral region except the layout region;
S320, in response to having the object control authority of the object to be laid out and receiving the object layout instruction for controlling the object to be laid out input in the layout region, controlling the object to be laid out to perform a response operation corresponding to the object layout instruction, wherein the object layout instruction includes an object movement instruction and an object placement instruction.

On the basis of the above-mentioned embodiments, in this embodiment, the layout object controller can input the object control instruction of the object to be laid out in the layout region when the controller has the control authority of the object to be laid out, and the object to be laid out is controlled to execute the response operation corresponding to the object control instruction based on the object control instruction.

In this embodiment, the object control instruction includes an object movement instruction. The instruction operation corresponding to the object movement instruction may include a sliding operation in the layout region of the target layout interface, or a layout position selection operation for a placeable position in the layout region, or other instruction operations.

Optionally, the layout object controller who has the object control authority of the object to be laid out is determined, and the object control instruction input by the layout object controller is monitored. Optionally, in response to detecting the instruction operation of the sliding operation input by the layout object controller in the peripheral region, it is determined that the object movement instruction for controlling the object to be laid out is received. Or, in response to detecting a layout position selection operation input for a placeable position in the layout region, the selected placeable position is taken as a target moving position, and an object movement instruction for moving the object to be laid out to the target moving position is generated. Optionally, the layout position selection operation input by the layout object controller can be a trigger operation such as single-clicking, double-clicking or long-pressing the layout position. In response to detecting the object movement instruction input by the layout object controller, the object to be laid out moves to and is displayed at the target moving position.

On the basis of the above embodiments, the object control instruction in the embodiments of the present disclosure further includes an object placement instruction, and the instruction operation corresponding to the object placement instruction may include a placement trigger operation for the object to be laid out in the layout region. Optionally, the object placement instruction can also be a preset trigger operation based on any operable position of the layout region, and of course it can also be other trigger operations.

Optionally, when it is monitored that the layout object controller performs an object placement trigger operation on the object to be laid out in the layout region, it is determined that an object placement instruction for controlling the object to be laid out is received. For example, the trigger operation may include trigger operations such as single click, double click, or long press.

Optionally, after detecting the object placement instruction of the object to be laid out, it is determined whether the display position of the object to be laid out displayed in the layout region is a position which is capable of laying out. In response to determining that the display position of the object to be laid out is a placeable position within the layout region, the display position is taken as the target layout position, and the layout operation is performed on the object to be laid out based on the target layout position. In response to determining that the display position of the object to be laid out is a position which is not capable of laying out in the layout region, the layout position closest to the current area is detected, the layout position is taken as a target layout position, and layout operation is performed on the object to be laid out based on the target layout position. Optionally, in response to determining that the display position of the object to be laid out is a position which is not capable of laying out in the layout region, at least one placeable position whose distance from the current area is within a preset distance threshold range is detected, the placeable prompt information of the object to be laid out is generated and displayed on the target layout interface based on respective placeable positions, the selection operation of the placeable position input by the layout object controller is received, the selected placeable position is taken as the target layout position, and layout operation is performed on the object to be laid out based on the target layout position.

The method of this embodiment includes: controlling the object to be laid out to perform the moving operation corresponding to the object movement instruction in the layout region when receiving the object movement instruction of the object to be laid out inputted by the layout object controller having the control authority in the layout region of the target layout interface; and when receiving an object placement instruction of the object to be laid out, placing the obj ect to be laid out at a target layout position in the layout region according to the current position of the object to be laid out. In the embodiments of the present disclosure, the object control instruction of the object to be laid out inputted by the layout object controller in the layout region can also be received on the basis of controlling the object to be laid out to perform a response operation corresponding to the object control instruction in the layout region when receiving the object control instruction of the object to be laid out inputted by the layout object controller in the peripheral region of the target layout interface, thereby achieving the effect of improving the flexibility of layout control of the object to be laid out.

Fig. 5 is a structural schematic diagram of a control apparatus of a layout object provided by an embodiment of the present disclosure. The control apparatus of the layout object provided by this embodiment can be realized by software and/or hardware, and can be configured in a terminal and/or a server to realize the control method of the layout object in the embodiments of the present disclosure. Referring to Fig. 5, the apparatus may include: a target layout interface exhibition module 410 and a to-be-laid-out object control module 420.

The target layout interface exhibition module 410 is configured to exhibit a target layout interface in response to a layout start instruction. The target layout interface includes a layout region and a peripheral region except the layout region.

The to-be-laid-out object control module 420 is configured to control the object to be laid out to perform a response operation corresponding to the object control instruction in response to having the object control authority of the object to be laid out and receiving the object control instruction for controlling the object to be laid out input in the peripheral region.

On the basis of any alternative implementations in the embodiments of the present disclosure, optionally, the object control instruction includes an object movement instruction, and the to-be-laid-out object control module 420 includes:
an object movement instruction receiving sub-module, configured to receive an object movement instruction for controlling the object to be laid out which is generated by a sliding operation input in the peripheral region; and
a to-be-laid-out object moving sub-module, configured to control the object to be laid out to move along the sliding trajectory corresponding to the sliding operation in the layout region.

On the basis of any optional implementations in the embodiments of the present disclosure, optionally, the to-be-laid-out object moving sub-module includes:
a sliding trajectory determination unit, configured to determine position change information of contact positions corresponding to the sliding operation at a plurality of moments, and determine a sliding trajectory corresponding to the sliding operation according to the position change information, wherein the position change information includes direction change information and distance change information; and
a first to-be-laid-out object moving unit, configured to determine the moving trajectory of the object to be laid out in the layout region according to the sliding trajectory, and control the object to be laid out to move along the moving trajectory.

On the basis of any optional implementations in the embodiments of the present disclosure, optionally, the to-be-laid-out object moving sub-module includes:
a second to-be-laid-out object moving unit, configured to determine the moving start position of the object to be laid out according to the laid-out objects in the layout region, and control the object to be laid out to move along the sliding trajectory corresponding to the sliding operation from the moving start position.

On the basis of any alternative implementations in the embodiments of the present disclosure, optionally, the second to-be-laid-out object moving unit includes:
a first moving start position determining sub-unit, configured to, in response to the existence of a laid-out object in the layout region, acquire the laid-out position of the last laid-out object in the layout region, and take the laid-out position as the moving start position of the object to be laid out.

On the basis of any optional technical schemes in the embodiments of the present disclosure, optionally, the second to-be-laid-out object moving unit includes:
a second moving start position determining sub-unit, configured to take the preset start position as the moving start position of the object to be laid out in response to the fact that there is no laid-out object in the layout region; or,
a third moving start position determining sub-unit, configured to receive a start position selection operation input for the placeable position in the layout region, and take the selected placeable position as the moving start position of the object to be laid out.

On the basis of any alternative implementations in the embodiments of the present disclosure, optionally, the object control instruction includes an object placement instruction; and the to-be-laid-out object control module 420 includes:
an object placement instruction receiving sub-module, configured to receive the object placement instruction generated by the control trigger operation acting on the preset placement control; and
an object placement sub-module, configured to place the object to be laid out at a target layout position in the layout region according to the current position of the object to be laid out.

On the basis of any alternative implementations of the embodiments of the present disclosure, optionally, the apparatus further comprises:
a second to-be-laid-out object control module, configured to control the object to be laid out to execute a response operation corresponding to the object layout instruction in response to having the object control authority of the object to be laid out and receiving the object layout instruction for controlling the object to be laid out input in the layout region.

On the basis of any alternative implementations in the embodiments of the present disclosure, optionally, the object layout instruction includes an object movement instruction, and the second to-be-laid-out object control module includes:
a second object movement instruction receiving sub-module, configured to receive a layout position selection operation input for a position capable of laying out in the layout region, take the selected position capable of laying out as a target moving position, and generate an object movement instruction for moving the object to be laid out to the target moving position; and
a second to-be-laid-out object moving sub-module, configured to move the object to be laid out to the target moving position and display the object to be laid out to at the target moving position.

On the basis of any alternative implementations in the embodiments of the present disclosure, optionally, the object layout instruction includes an object placement instruction, and the second to-be-laid-out object control module includes:
an object layout instruction receiving sub-module, configured to receive an object layout instruction generated by a click operation on the object to be laid out displayed in the layout region; and
an object layout sub-module, configured to place the object to be laid out at a target layout position according to the display position of the object to be laid out.

On the basis of any alternative implementations of the embodiments of the present disclosure, optionally, the apparatus further comprises:
an object control authority determining sub-module, configured to determine the object control authority of the obj ect to be laid out according to a preset layout rule, wherein the preset layout rule includes the layout object controller of the object to be laid out and the authority activation mode of the layout object controller.

The apparatus can execute the method provided by any embodiments of the present disclosure, and has corresponding functional modules and beneficial effects as executing the method.

It should be noted that respective units and modules included in the above apparatus are only divided according to functional logic, as long as the corresponding functions can be realized in the actual division process. In addition, the specific names of respective functional units are only for the convenience of distinguishing each other.

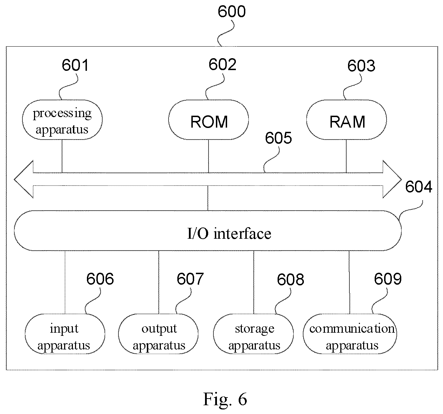

Fig. 6 is a schematic structural diagram of an electronic device provided by an embodiment of the present disclosure. Hereinafter, referring to Fig. 6, it illustrates a schematic structural diagram of an electronic device (such as a terminal device or a server in Fig. 6) 600 suitable for implementing the embodiments of the present disclosure. The terminal device in the embodiments of the present disclosure may include a mobile terminal such as a mobile phone, a laptop, a digital broadcast receiver, a personal digital assistant (PDA), a portable android device (PAD), a portable multimedia player (PMP), a vehicle-mounted terminal (e.g., a vehicle-mounted navigation terminal), etc., and a stationary terminal such as a digital television (TV), a desktop computer, etc. The electronic device illustrated in Fig. 6 is only an example.

As illustrated in Fig. 6, the electronic device 600 may include a processing apparatus (e.g., a central processing unit, a graphics processing unit, etc.) 601, which may execute various appropriate actions and processing according to a program stored in a read-only memory (ROM) 602 or a program loaded from a storage apparatus 608 into a random access memory (RAM) 603. The RAM 603 further stores various programs and data required for operation of the electronic device 600. The processing apparatus 601, the ROM 602, and the RAM 603 are connected with each other through a bus 605. An input/output (I/O) interface 604 is also coupled to the bus 605.

Usually, apparatuses below may be coupled to the I/O interface 604: input apparatuses 606 including, for example, a touch screen, a touch pad, a keyboard, a mouse, a camera, a microphone, an accelerometer, a gyroscope, etc.; output apparatuses 607 including, for example, a liquid crystal display (LCD), a speaker, a vibrator, etc.; storage apparatuses 608 including, for example, a magnetic tape, a hard disk, etc.; and a communication apparatus 609. The communication apparatus 609 may allow the electronic device 600 to perform wireless or wired communication with other device to exchange data. Although Fig. 6 illustrates the electronic device 600 including various apparatuses, it should be understood that it is not required to implement or have all the apparatuses illustrated, and the electronic device may alternatively implement or have more or fewer apparatuses.

Specially, according to the embodiments of the present disclosure, the process described above with reference to the flow chart may be implemented as computer software programs. For example, the embodiments of the present disclosure provide a computer program product, which includes a computer program carried on a non-transitory computer readable medium, and the computer program includes program codes for executing the method illustrated in the flow charts. In such embodiments, the computer program may be downloaded and installed from the network via the communication apparatus 609, or installed from the storage apparatus 608, or installed from the ROM 602. When executed by the processing apparatus 601, the computer program may execute the above-described functions defined in the method provided by the embodiments of the present disclosure.

The electronic device provided by the embodiments of the present disclosure and the control method of the layout object provided in the above embodiments belong to the same invention concept. Technical details not fully described in this embodiment can be found in the above embodiments, and this embodiment has the same beneficial effect as the above embodiments.

The embodiments of the present disclosure provide a computer storage medium on which a computer program is stored. When the program is executed by a processor, the control method of the layout object provided in the above embodiments is implemented.

It should be noted that the above-mentioned computer-readable medium in the present disclosure may be a computer-readable signal medium or a computer-readable storage medium or any combination thereof. For example, the computer-readable storage medium may be an electric, magnetic, optical, electromagnetic, infrared, or semiconductor system, apparatus or device, or any combination thereof. The computer-readable storage medium may include: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to:
exhibiting a target layout interface in response to a layout start instruction, wherein the target layout interface comprises a layout region and a peripheral region except the layout region; and
in response to having an object control authority of an object to be laid out and receiving an object control instruction for controlling the object to be laid out input in the peripheral region, controlling the object to be laid out to execute a response operation corresponding to the object control instruction.

The computer program codes for performing the operations of the present disclosure may be written in one or more programming languages or a combination thereof. The above-mentioned programming languages include object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes an electrical, magnetic, optical, electromagnetic, infrared, or semi-conductive system, apparatus or device, or any suitable combination of the foregoing. Examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, example 1 provides a control method of a layout object, comprising:
exhibiting a target layout interface in response to a layout start instruction, wherein the target layout interface comprises a layout region and a peripheral region except the layout region; and
in response to having an object control authority of an object to be laid out and receiving an object control instruction for controlling the object to be laid out input in the peripheral region, controlling the object to be laid out to execute a response operation corresponding to the object control instruction.

According to one or more embodiments of the present disclosure, example 2 provides a control method of a layout object, and in the method:
the object control instruction comprises an object movement instruction; and receiving the object control instruction for controlling the object to be laid out input in the peripheral region comprises:
receiving the object movement instruction for controlling the object to be laid out which is generated by a sliding operation input in the peripheral region;
controlling the object to be laid out to execute the response operation corresponding to the object control instruction comprises:
   controlling the object to be laid out to move along a sliding trajectory corresponding to the sliding operation within the layout region.

According to one or more embodiments of the present disclosure, example 3 provides a control method of a layout object, and in the method:
controlling the object to be laid out to move along the sliding trajectory corresponding to the sliding operation within the layout region comprises:
determining position change information of contact positions respectively corresponding to the sliding operation at a plurality of moments, and determining the sliding trajectory corresponding to the sliding operation according to the position change information, wherein the position change information comprises direction change information and distance change information; and
determining a moving trajectory of the object to be laid out in the layout region according to the sliding trajectory, and controlling the object to be laid out to move along the moving trajectory.

According to one or more embodiments of the present disclosure, example 4 provides a control method of a layout object, and in the method:
controlling the object to be laid out to move along the sliding trajectory corresponding to the sliding operation within the layout region comprises:
determining a moving start position of the object to be laid out according to a laid-out object in the layout region, and controlling the object to be laid out to move along the sliding trajectory corresponding to the sliding operation from the moving start position.

According to one or more embodiments of the present disclosure, example 5 provides a control method of a layout object, and in the method:
determining the moving start position of the object to be laid out according to the laid-out object in the layout region comprises:
in response to existence of the laid-out object in the layout region, obtaining a laid-out position of a last laid-out object in the layout region, and taking the laid-out position as the moving starting position of the object to be laid out.

According to one or more embodiments of the present disclosure, example 6 provides a control method of a layout object, and in the method:
determining the moving start position of the object to be laid out according to the laid-out object in the layout region comprises:
in response to there being no laid-out object in the layout region, taking a preset starting position as the moving start position of the object to be laid out; or,
receiving a start position selection operation input for a position capable of laying out in the layout region, and taking a selected position capable of laying out as the moving start position of the object to be laid out.

According to one or more embodiments of the present disclosure, example 7 provides a control method of a layout object, and in the method:
the object control instruction comprises an object placement instruction; and receiving the object control instruction for controlling the object to be laid out input in the peripheral region comprises:
receiving the object placement instruction generated by a control trigger operation acting on a preset placement control;
controlling the object to be laid out to execute the response operation corresponding to the object control instruction comprises:
placing the object to be laid out to a target layout position in the layout region according to a current position of the object to be laid out.

According to one or more embodiments of the present disclosure, example 8 provides a control method of a layout object, and the method further comprises:
in response to having the object control authority of the object to be laid out and receiving an object layout instruction for controlling the object to be laid out input in the layout region, controlling the object to be laid out to execute a response operation corresponding to the object layout instruction.

According to one or more embodiments of the present disclosure, example 9 provides a control method of a layout object, and in the method:
the object layout instruction comprises an object movement instruction; and receiving the object layout instruction input in the layout region comprises:
receiving a layout position selection operation input for a position capable of laying out in the layout region, taking a selected position capable of laying out as a target moving position, and generating the object movement instruction for moving the object to be laid out to the target moving position;
controlling the object to be laid out to execute the response operation corresponding to the object layout instruction comprises:
   moving the object to be laid out to the target moving position and displaying the object to be laid out at the target moving position.

According to one or more embodiments of the present disclosure, example 10 provides a control method of a layout object, and in the method:
the object layout instruction comprises an object placement instruction; and receiving the object layout instruction input in the layout region comprises:
receiving the object layout instruction generated by a click operation on the object to be laid out displayed in the layout region;
controlling the object to be laid out to execute the response operation corresponding to the object layout instruction comprises:
placing the object to be laid out to a target layout position according to a display position of the object to be laid out.

According to one or more embodiments of the present disclosure, example 11 provides a control method of a layout object, and the method further comprises:
determining the object control authority of the object to be laid out according to a preset layout rule, wherein the preset layout rule comprises a layout object controller of the object to be laid out and an authority activation mode of the layout object controller.

According to one or more embodiments of the present disclosure, example 12 provides a control apparatus of a layout object, and the apparatus comprises:
a target layout interface exhibition module, configured to exhibit a target layout interface in response to a layout start instruction, wherein the target layout interface comprises a layout region and a peripheral region except the layout region; and
a to-be-laid-out object control module, configured to, in response to having an object control authority of an object to be laid out and receiving an object control instruction for controlling the object to be laid out input in the peripheral region, control the object to be laid out to execute a response operation corresponding to the object control instructions.

Although multiple operations are described in a specific order, this should not be understood as requiring them to be executed in the illustrated specific order or in sequential order. In certain environments, multitasking and parallel processing may be advantageous. Some features described in the context of individual embodiment can also be combined to be implemented in a single embodiment. On the contrary, multiple features described in the context of a single embodiment can also be implemented separately or in any suitable sub-combination in multiple embodiments.

## Claims

1. A control method of a layout object, comprising:
exhibiting a target layout interface in response to a layout start instruction, wherein the target layout interface comprises a layout region and a peripheral region except the layout region; and
in response to having an object control authority of an object to be laid out and receiving an object control instruction for controlling the object to be laid out input in the peripheral region, controlling the object to be laid out to execute a response operation corresponding to the object control instruction.

2. The method according to claim 1, wherein the object control instruction comprises an object movement instruction;
receiving the object control instruction for controlling the object to be laid out input in the peripheral region comprises:
receiving the object movement instruction for controlling the object to be laid out which is generated by a sliding operation input in the peripheral region;
controlling the object to be laid out to execute the response operation corresponding to the object control instruction comprises:
controlling the object to be laid out to move along a sliding trajectory corresponding to the sliding operation within the layout region.

3. The method according to claim 2, wherein controlling the object to be laid out to move along the sliding trajectory corresponding to the sliding operation within the layout region comprises:
determining position change information of contact positions respectively corresponding to the sliding operation at a plurality of moments, and determining the sliding trajectory corresponding to the sliding operation according to the position change information, wherein the position change information comprises direction change information and distance change information; and
determining a moving trajectory of the object to be laid out in the layout region according to the sliding trajectory, and controlling the object to be laid out to move along the moving trajectory.

4. The method according to claim 2, wherein controlling the object to be laid out to move along the sliding trajectory corresponding to the sliding operation within the layout region comprises:
determining a moving start position of the object to be laid out according to a laid-out object in the layout region, and controlling the object to be laid out to move along the sliding trajectory corresponding to the sliding operation from the moving start position.

5. The method according to claim 4, wherein determining the moving start position of the object to be laid out according to the laid-out object in the layout region comprises:
in response to existence of the laid-out object in the layout region, obtaining a laid-out position of a last laid-out object in the layout region, and taking the laid-out position as the moving starting position of the object to be laid out.

6. The method according to claim 4, wherein determining the moving start position of the object to be laid out according to the laid-out object in the layout region comprises:
in response to there being no laid-out object in the layout region, taking a preset starting position as the moving start position of the object to be laid out; or,
receiving a start position selection operation input for a position capable of laying out in the layout region, and taking a selected position capable of laying out as the moving start position of the object to be laid out.

7. The method according to claim 1, wherein the object control instruction comprises an object placement instruction;
receiving the object control instruction for controlling the object to be laid out input in the peripheral region comprises:
receiving the object placement instruction generated by a control trigger operation acting on a preset placement control;
controlling the object to be laid out to execute the response operation corresponding to the object control instruction comprises:
placing the object to be laid out to a target layout position in the layout region according to a current position of the object to be laid out.

8. The method according to claim 1, further comprising:
in response to having the object control authority of the object to be laid out and receiving an object layout instruction for controlling the object to be laid out input in the layout region, controlling the object to be laid out to execute a response operation corresponding to the object layout instruction.

9. The method according to claim 8, wherein the object layout instruction comprises an object movement instruction;
receiving the object layout instruction input in the layout region comprises:
receiving a layout position selection operation input for a position capable of laying out in the layout region, taking a selected position capable of laying out as a target moving position, and generating the object movement instruction for moving the object to be laid out to the target moving position;
controlling the object to be laid out to execute the response operation corresponding to the object layout instruction comprises:
moving the object to be laid out to the target moving position and displaying the object to be laid out at the target moving position.

10. The method according to claim 8, wherein the object layout instruction comprises an object placement instruction;
receiving the object layout instruction input in the layout region comprises:
receiving the object layout instruction generated by a click operation on the object to be laid out displayed in the layout region;
controlling the object to be laid out to execute the response operation corresponding to the object layout instruction comprises:
placing the object to be laid out to a target layout position according to a display position of the object to be laid out.

11. The method according to claim 1, further comprising:
determining the object control authority of the object to be laid out according to a preset layout rule, wherein the preset layout rule comprises a layout object controller of the object to be laid out and an authority activation mode of the layout object controller.

12. A control apparatus of a layout object, comprising:
a target layout interface exhibition module, configured to exhibit a target layout interface in response to a layout start instruction, wherein the target layout interface comprises a layout region and a peripheral region except the layout region; and
a to-be-laid-out object control module, configured to, in response to having an object control authority of an object to be laid out and receiving an object control instruction for controlling the object to be laid out input in the peripheral region, control the object to be laid out to execute a response operation corresponding to the object control instructions.

13. An electronic device, comprising:
one or more processors; and
a storage apparatus for storing one or more programs,
wherein, when the one or more programs are executed by the one or more processors, the one or more processors implement the control method of the layout object according to any one of claims 1-11.

14. A computer-readable storage medium, wherein a computer program is stored on the computer-readable storage medium, when executed by a processor, the computer program implements the control method of the layout object according to any one of claims 1-11.
